# EUROPÄISCHE PATENTSCHRIFT

(11) **EP 3 147 612 B1**
(45) Veröffentlichungstag und Bekanntmachung des Hinweises auf die Patenterteilung: **26.07.2023**
(21) Anmeldenummer: 16002035.0
(22) Anmeldetag: 20.09.2016
(51) Int. Cl.: F25J 3/02, C01B 3/50, C01B 32/40

(54) **VERFAHREN UND ANLAGE ZUR TRENNTECHNISCHEN BEARBEITUNG EINES GASGEMISCHS**
METHOD AND SYSTEM FOR SEPARATION OF A GAS MIXTURE
PROCÉDÉ ET INSTALLATION DE TRAITEMENT TECHNIQUE DE SÉPARATION D'UN MÉLANGE DE GAZ

(30) Priorität: 23.09.2015 DE 102015012317
(43) Veröffentlichungstag der Anmeldung: 29.03.2017
(73) Patentinhaber: Linde GmbH, 82049 Pullach (DE)
(72) Erfinder: Klein, Bernd, 80997 München (DE)
(74) Vertreter: Fischer, Werner

(56) Entgegenhaltungen:
- EP-A1- 0 968 959
- EP-A1- 1 729 077
- US-A- 5 634 354
- LINDE AG: "Cryogenic Gas separation: The most economic and experienced separation process for production of Carbon Monoxide and Hydrogen from raw synthesis gas", 20121031, 31. Oktober 2012 (2012-10-31), Seiten 1-11, XP007922110,
- SPILLMAN R W: "ECONOMICS OF GAS SEPARATION MEMBRANES", CHEMICAL ENGINEERING PROGRESS, AMERICAN INSTITUTE OF CHEMICAL ENGINEERS, NEW YORK, NY, US, Bd. 85, Nr. 1, 1. Januar 1989 (1989-01-01) , Seiten 41-62, XP001069735, ISSN: 0360-7275

## Beschreibung

Die Erfindung betrifft ein Verfahren und eine Anlage zur trenntechnischen Bearbeitung eines überwiegend oder ausschließlich Kohlenmonoxid und Wasserstoff enthaltenden Einsatzgemischs gemäß den Oberbegriffen der jeweiligen unabhängigen Patentansprüche.

### Stand der Technik

Hochreines Kohlenmonoxid wird üblicherweise mittels kryogener Trennverfahren aus Synthesegas, das gewöhnlich über eine katalytische Umwandlung, partielle Oxidation, autotherme Reformierung und/oder Dampfreformierung von Kohle bzw. Koks, Erdgas und/oder kohlenwasserstoffhaltigen Einsätzen hergestellt wird, gewonnen.

In den Patentanmeldungen EP 0 130 284 A2 und EP 1 729 077 A1 sowie in der im Einspruchsverfahren der EP 1 729 077 B1 zitierten Veröffentlichung "Cryogenic Gas Separation: The most economic and experienced separation process for production of Carbon Monoxide and Hydrogen from raw synthesis gases" der LINDE AG werden Verfahren zur Gewinnung von reinem Kohlenmonoxid aus einem nach Abtrennung anderer Komponenten wie Methan und Stickstoff noch hauptsächlich Wasserstoff und Kohlenmonoxid enthaltenden Einsatzgemisch beschrieben. Das Einsatzgemisch wird verdichtet, adsorptiv von noch enthaltendem Kohlendioxid und Wasser befreit, und bis zur Kondensation des überwiegenden Teils des Kohlenmonoxids abgekühlt. Die verbleibende gasförmige Fraktion wird erwärmt und abgegeben und das kondensierte Kohlenmonoxid wird zur Ausgasung von darin gelöstem Wasserstoff entspannt. Das verbleibende Kohlenmonoxid wird zu einem Teil verdampft und zu einem Teil als Produkt abgegeben.

Verfahren der erläuterten Art umfassen also einen kryogenen Trennprozess mit einem ersten Trennschritt und einem zweiten Trennschritt. In dem ersten Trennschritt wird der überwiegende Teil des Kohlenmonoxids unter Verbleib nicht kondensierten Rests (üblicherweise als "Rohwasserstoff', im Rahmen der vorliegenden Anmeldung auch als "erstes" Restgasgemisch bezeichnet) auskondensiert. In dem zweiten Trennschritt wird das kondensierte Kohlenmonoxid entspannt, so dass der gelöste Wasserstoff ausgast und damit ein weiteres Gasgemisch gebildet wird (üblicherweise als "Flashgas", im Rahmen der vorliegenden Anmeldung auch als "zweites" Restgasgemisch bezeichnet).

Das in dem ersten Trennschritt gebildete erste Restgasgemisch enthält noch beträchtliche Mengen an Kohlenmonoxid. In herkömmlichen Verfahren wird dieses erste Restgasgemisch aus dem Verfahren ausgeleitet. Das in dem ersten Restgasgemisch enthaltene Kohlenmonoxid geht daher verloren. Auch in dem zweiten Trennschritt gehen gewisse Mengen an Kohlenmonoxid in die Gasphase über. Auch in dem zweiten Restgasgemisch sind damit nicht unbeträchtliche Mengen an Kohlenmonoxid enthalten. Der Gehalt an Kohlenmonoxid in dem zweiten Restgasgemisch entspricht dem Gleichgewicht am Kopf einer hierbei verwendeten Stripkolonne. Auch derartiges Kohlenmonoxid ist in herkömmlichen Verfahren als Verlust anzusehen. Die genannten Verluste an Kohlenmonoxid verringern insgesamt die Kohlenmonoxidausbeute eines entsprechenden Verfahrens bzw. einer entsprechenden Anlage.

Vor diesem Hintergrund stellt sich die vorliegende Erfindung die Aufgabe, ein Verfahren und eine Anlage zur trenntechnischen Bearbeitung eines überwiegend oder ausschließlich Kohlenmonoxid und Wasserstoff enthaltenden Einsatzgemischs anzugeben, mit welchem bzw. welcher sich die erläuterten Kohlenmonoxidverluste verringern und sich damit insgesamt höhere Kohlenmonoxidausbeuten erzielen lassen.

### Offenbarung der Erfindung

Diese Aufgabe wird durch ein Verfahren und eine Anlage zur trenntechnischen Bearbeitung eines überwiegend oder ausschließlich Kohlenmonoxid und Wasserstoff enthaltenden Einsatzgemischs mit den Merkmalen der jeweiligen unabhängigen Patentansprüche gelöst. Ausgestaltungen sind jeweils Gegenstand der abhängigen Patentansprüche sowie der nachfolgenden Beschreibung.

Vor der Erläuterung der Merkmale und Vorteile der vorliegenden Erfindung werden deren Grundlagen und die verwendeten Begriffe erläutert.

Zu Verfahren und Vorrichtungen zur Herstellung von Synthesegas, insbesondere bezüglich der partiellen Oxidation (engl. Partial Oxidation), der autothermen Reformierung (Autothermal Reforming, ATR) und der Dampfreformierung (Steam Methane Reforming, SMR) sei auf einschlägige Lehrbuchartikel wie den Artikel "Gas Production" in Ullmann's Encyclopedia of Industrial Chemistry, Onlineausgabe 15. Dezember 2006, DOI 10.1002/14356007.a12_169.pub2, verwiesen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5% oder sogar 10% um einen Mittelwert liegen. Entsprechende Druckniveaus und Temperaturniveaus können dabei in disjunkten Bereichen liegen oder in Bereichen, die einander überlappen. Insbesondere schließen beispielsweise Druckniveaus unvermeidliche oder zu erwartende Druckverluste, beispielsweise aufgrund von Abkühlungseffekten, ein. Entsprechendes gilt für Temperaturniveaus. Bei den hier in bar angegebenen Druckniveaus handelt es sich um Absolutdrücke.

Flüssige und gasförmige Gemische können im hier verwendeten Sprachgebrauch reich oder arm an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann. Der Begriff "überwiegend" kann der Definition von "reich" entsprechen. Flüssige und gasförmige Gemische können im hier verwendeten Sprachgebrauch ferner angereichert oder abgereichert an einer oder mehreren Komponenten sein, wobei sich diese Begriffe auf einen entsprechenden Gehalt in einem Ausgangsgemisch beziehen, aus dem das flüssige oder gasförmige Gemisch erhalten wurde. Das flüssige oder gasförmige Gemisch ist "angereichert", wenn es zumindest den 1,1-fachen, 1 ,5-fachen, 2-fachen, 5-fachen, 10-fachen, 100-fachen oder 1.000-fachen Gehalt, "abgereichert", wenn es höchstens den 0,9-fachen, 0,5-fachen, 0,1-fachen, 0,01-fachen oder 0,001-fachen Gehalt einer entsprechenden Komponente, bezogen auf das Ausgangsgemisch, enthält.

Ein "kryogener Trennprozess" ist im hier verwendeten Sprachgebrauch ein ein- oder mehrstufiger thermischer Prozess zur Auftrennung von Fluiden, der auf einem Temperaturniveau von unter -100 °C, insbesondere von -150 bis -200 °C, beispielsweise ca. -185 °C, durchgeführt wird. Ein kryogener Trennprozess kann die Verwendung von Wärmetauschern, Kondensationsbehältern, Stripkolonnen und/oder Ventilen umfassen, die in einer Coldbox bzw. Kältekammer angeordnet sind.

Eine "Stripkolonne" ist im hier verwendeten Sprachgebrauch eine Trennsäule, die zum Austreiben einer leichter flüchtigen Komponente (hier Wasserstoff) aus einem flüssigen Gemisch mit einer schwerer flüchtigen Komponente (hier Kohlenmonoxid) zum Einsatz kommt. Typischerweise wird das Gemisch hierzu in die Stripkolonne entspannt. Zur Ausbildung von Stripkolonnen (Strippern) und anderen Einrichtungen für thermische Trennverfahren sei auf einschlägige Lehrbücher verwiesen (siehe beispielsweise Sattler, K.: Thermische Trennverfahren: Grundlagen, Auslegung, Apparate, 3. Auflage 2001, Weinheim, Wiley-VCH).

Ist hier davon die Rede, dass ein Gemisch "aus" oder "unter Verwendung" eines anderen Gemischs gebildet wird, sei hierunter sowohl verstanden, dass zur Bildung des Gemischs das gesamte anderen Gemisch verwendet wird, es kann jedoch auch nur ein Teil des anderen Gemischs, beispielsweise nach Abtrennung anderer Komponenten, beispielsweise von Kondensaten, und/oder zusätzliches Fluid neben dem anderen Gemisch verwendet werden.

Ein "Verdichtungsprozess" wird im hier verwendeten Sprachgebrauch mittels eines ein- oder mehrstufigen Verdichters durchgeführt, der zum Verdichten wenigstens eines gasförmigen Stroms von wenigstens einem Eingangsdruck, bei dem dieser dem Verdichter zugeführt wird, auf wenigstens einen Enddruck, bei dem dieser dem Verdichter entnommen wird, eingerichtet ist. Ein Verdichter bildet eine bauliche Einheit, die jedoch mehrere "Verdichterstufen" in Form von Kolben-, Schrauben- und/oder Schaufelrad- bzw. Turbinenanordnungen (also Axial- oder Radialverdichterstufen) aufweisen kann. Insbesondere werden entsprechende Verdichterstufen mittels eines gemeinsamen Antriebs, beispielsweise über eine gemeinsame Welle, angetrieben.

### Vorteile der Erfindung

Zur Lösung des eingangs erläuterten Problems schlägt die vorliegende Erfindung ein Verfahren zur trenntechnischen Bearbeitung eines überwiegend oder ausschließlich Kohlenmonoxid und Wasserstoff enthaltenden Einsatzgemischs vor, bei dem das Einsatzgemisch einem kryogenen Trennprozess unterworfen wird, in dem eine kohlenmonoxidreiche Flüssigkeit und ein gegenüber dem Einsatzgemisch an Kohlenmonoxid abgereichertes und an Wasserstoff angereichertes Restgasgemisch gebildet werden. Grundsätzlich entspricht dieses Verfahren, von dem die vorliegende Erfindung ausgeht, dem eingangs erläuterten Verfahren des Standes der Technik, wie es beispielsweise aus der EP 0 130 284 A2 bekannt ist, und bei dem die eingangs erläuterten Probleme auftreten. Im Rahmen des erfindungsgemäßen Verfahrens wird zunächst eine Kondensation des überwiegenden Teils des Kohlenmonoxids aus dem Ausgangsgemisch unter Verbleib eines ersten Restgasgemischs ("Rohwasserstoff') durchgeführt. Das gebildete Kondensat (hier, wie auch unten ausführlich erläutert, als "Zwischenfraktion" bezeichnet) wird zur Ausgasung des gelösten Wasserstoffs entspannt und in eine Stripkolonne eingespeist. Wie erläutert, werden dabei eine zweite, noch Kohlenmonoxid enthaltende, wasserstoffreiche Restgasfraktion ("Flashgas") und das eigentliche flüssige, kohlenmonoxidreiche Produkt des Verfahrens, welches hier auch als "kohlenmonoxidreiche Flüssigkeit" bezeichnet wird, gebildet.

Die vorliegende Erfindung sieht vor, das erste und das zweite Restgasgemisch einem Membrantrennprozess zu unterwerfen, in dem ein erstes und eine zweites wasserstoffreiches Permeat sowie ein erstes und eine zweites kohlenmonoxidreiches Retentat gebildet werden. Die beiden kohlenmonoxidreichen Retentate werden im Rahmen der vorliegenden Erfindung in den kryogenen Trennprozess zurückgeführt. Auf diese Weise kann das in der ersten Restgasfraktion, also dem Rohwasserstoff, und der zweiten Restgasfraktion, also dem Flashgas, enthaltene Kohlenmonoxid zurückgewonnen und in den Trennprozess zurückgeführt werden. Im Rahmen eines derartigen Verfahrens verringern sich die Verluste, und die Kohlenmonoxidausbeute erhöht sich entsprechend.

Der im Rahmen der vorliegenden Erfindung eingesetzte Membrantrennprozess umfasst einen ersten Membrantrennschritt und einen zweiten Membrantrennschritt, die beide insbesondere als druckgetriebene Membranprozesse mit Polymermembranen realisiert werden. In dem ersten Membrantrennschritt wird dabei ein erstes wasserstoffreiches Permeat und ein erstes kohlenmonoxidreiches Retentat gebildet. In dem zweiten Membrantrennschritt wird ein zweites wasserstoffreiches Permeat und ein zweites kohlenmonoxidreiches Retentat gebildet. Im Rahmen der vorliegenden Anmeldung wird mit dem Begriff "Permeat" die eine in einem entsprechenden Membrantrennprozess bzw. einem Membrantrennschritt eines solchen Membrantrennprozesses eingesetzte Membran bevorzugt durchdringenden Komponenten verstanden. Ein "Retentat" wird hingegen von einer entsprechenden Membran zurückgehalten. Im vorliegenden Fall durchdringt Wasserstoff aufgrund seiner geringeren Molekülgröße bevorzugt eine verwendete Membran, Kohlenmonoxid wird hingegen überwiegend zurückgehalten.

Wie in jedem Trennverfahren sind auch entsprechende Membrantrennprozesse bzw. deren Membrantrennschritte nicht mit beliebiger Trennschärfe durchführbar, so dass stets ein Teil der überwiegend in das Permeat übergehenden Komponenten (hier Wasserstoff) auch in das Retentat übergehen. Entsprechendes gilt auch für die überwiegend in das Retentat übergehenden Komponenten, die sich auch zu einem gewissen Teil im Permeat wiederfinden. Aus diesem Grund erweist sich die Verwendung von zwei Membrantrennschritten besonders vorteilhaft, die in der nachfolgend erläuterten Weise seriell miteinander verbunden sind.

Besonders vorteilhaft ist es, wenn das erste wasserstoffreiche Permeat aus dem ersten Membrantrennschritt von dem ersten Membrantrennschritt in den zweiten Membrantrennschritt überführt wird. Vorteilhafterweise werden dabei die beiden Membrantrennschritte auf unterschiedlichen Druckniveaus durchgeführt, wobei der ersten Membrantrennschritt auf einem ersten Druckniveau, das dem Druckniveau des Einsatzgemischs entspricht, und der zweite Membrantrennschritt auf einem zweiten Druckniveau unterhalb des ersten Druckniveaus durchgeführt wird. Wird, wie nachfolgend erläutert, eine Stripkolonne in dem kryogenen Trennprozess verwendet, kann das zweite Druckniveau auf dem Druckniveau der Stripkolonne oder tiefer liegen. In jedem der Membrantrennschritte ergibt sich ein gewisser Druckabfall, jedoch kann aufgrund des Druckunterschieds zwischen dem ersten Membrantrennschritt und dem zweiten Membrantrennschritt sichergestellt werden, dass das Permeat aus dem ersten Membrantrennschritt ohne weitere Verdichtung und zusätzlichen apparativen bzw. energetischen Aufwand in den zweiten Membrantrennschritt überführt werden kann.

Wie bereits erläutert, werden in dem kryogenen Trennprozess ein erstes Restgasgemisch und ein zweites Restgasgemisch gebildet, wobei das erste Restgasgemisch dem ersten Membrantrennschritt und das zweite Restgasgemisch dem zweiten Membrantrennschritt zugeführt wird. Die Membrantrennschritte können auf diese Weise mit Restgasgemischen unterschiedlicher Kohlenmonoxid- bzw. Wasserstoffkonzentration beaufschlagt werden. So kann insbesondere das erste Restgasgemisch einen höheren Kohlenmonoxidgehalt als das zweite Restgasgemisch und das erste wasserstoffreiche Permeat einen höheren Kohlenmonoxidgehalt als das zweite wasserstoffreiche Permeat aufweisen. Die Membrantrennschritte können, beispielsweise hinsichtlich der verwendeten Membranen und anderer Prozessparameter, spezifisch an die Kohlenmonoxidgehalte der verwendeten Restgasgemische angepasst werden. Der erste Membrantrennschritt nimmt auf diese Weise eine Vortrennung und der zweite Membrantrennschritt eine Feintrennung vor.

Wie auch in bekannten Verfahren, wird in dem kryogenen Trennprozess zunächst durch teilweise Kondensation des Einsatzgemischs auf dem ersten Druckniveau, d.h. auf dem Druckniveau, auf dem auch der erste Membrantrennschritt durchgeführt wird, in einem Abscheidebehälter unter Verbleib eines ersten Restgasgemischs eine flüssige Zwischenfraktion gebildet. Das erste Restgasgemisch entspricht damit, wie mehrfach erwähnt, dem sogenannten Rohwasserstoff des eingangs erläuterten bekannten Verfahrens.

Anschließend wird die flüssige Zwischenfraktion in dem kryogenen Trennprozess auf ein Zwischendruckniveau entspannt und in eine Stripkolonne eingespeist, der das zweite Restgasgemisch, also das herkömmlicherweise als Flashgas bezeichnete Gasgemisch, und die kohlenmonoxidreiche Flüssigkeit, also das eigentliche Produkt des Verfahrens, entnommen werden. Das Zwischendruckniveau und damit der Druck der Strippkolonne wird vorteilhafterweise entsprechend den Prozessbedingungen gewählt. Bei einem vorteilhaften Standardprozess kann beispielsweise das zweite Druckniveau an den Kondensationsverlauf des Einsatzgases angepasst werden, da ein Aufkocher des verwendeten Strippers normalerweise gegen das einkondensierende Einsatzgemisch beheizt wird. Das Zwischendruckniveau kann oberhalb des zweiten Druckniveaus liegen oder diesem entsprechen.

Die kohlenmonoxidreiche Flüssigkeit kann anschließend in beliebiger Weise weiter aufbereitet werden.

Auf diese Weise, d.h. durch die zunächst teilweise Kondensation des Einsatzgemischs unter Verbleib des ersten Restgasgemischs und die anschließende Entspannung in die Stripkolonne unter Bildung des zweiten Restgasgemischs, können das erste und das zweite Restgasgemisch mit den erläuterten unterschiedlichen Gehalten an Kohlenmonoxid und auf unterschiedlichen Druckniveaus bereitgestellt werden, so dass diese anschließend direkt oder ggf. nach einer Entspannung dem ersten und dem zweiten Membrantrennschritt zugeführt werden können.

Weil das zweite Restgasgemisch in der Stripkolonne auf dem Zwischendruckniveau anfällt, wird es vorteilhafterweise vor der Zuführung zu dem zweiten Membrantrennschritt auf das zweite Druckniveau entspannt, auf dem dieser Membrantrennschritt durchgeführt wird, wenn letzteres tiefer liegt.

Zur Wärmerückgewinnung erweist es sich als besonders vorteilhaft, wenn das erste Restgasgemisch und das zweite Restgasgemisch im Gegenstrom zu dem Einsatzgemisch erwärmt werden. In einem entsprechenden kryogenen Trennprozess können jedoch weitere Kältemittel bzw. kalte Ströme verwendet werden. Für den Wärmetausch kann insbesondere ein Plattenwärmetauscher, der beispielsweise zusammen mit dem Abscheidebehälter und der Stripkolonne in einer Coldbox angeordnet sein kann, verwendet werden.

Für die Behandlung der Retentate bieten sich im Rahmen der Erfindung mehrere unterschiedliche zweckmäßige Möglichkeiten an, die nachfolgend erläutert werden.

Insbesondere können das erste und das zweite kohlenmonoxidreiche Retentat auf das Zwischendruckniveau gebracht, vereinigt und in die Stripkolonne eingespeist werden. Dies erweist sich als besonders günstig, weil in diesem Fall lediglich das zweite kohlenmonoxidreiche Retentat geringfügig von dem zweiten Druckniveau auf das Zwischendruckniveau verdichtet werden muss. Das erste kohlenmonoxidreiche Retentat kann hingegen auf das Zwischendruckniveau und/oder das Druckniveau des hinzuzumischenden zweiten Restgasgemisches, entspannt werden.

Eine weitere vorteilhafte Möglichkeit ist, das erste kohlenmonoxidreiche Retentat auf das Zwischendruckniveau zu entspannen und in die Stripkolonne einzuspeisen, das zweite kohlenmonoxidreiche Retentat hingegen auf das erste Druckniveau zu bringen und mit dem Einsatzgemisch zu vereinigen. Dies erlaubt eine gezielte Berücksichtigung der vorliegenden Prozessparameter. Je nach dem Kohlenmonoxidgehalt des Einsatzgemischs kann beispielsweise eine Erhöhung seines Kohlenmonoxidgehalts durch Rückspeisung des zweiten kohlenmonoxidreichen Retentats ins Einsatzgas vorteilhaft sein, weil sich dadurch ein günstigeres Kondesationsverhalten ergeben kann. Eine Rückspeisung ins Einsatzgas kann auch vorteilhaft sein, wenn die Rücklaufmenge für die Stripkolonne begrenzt ist und damit nicht beide Retentate in die Stripkolonne geführt werden können.

Schließlich können auch das erste und das zweite kohlenmonoxidreiche Retentat auf das erste Druckniveau gebracht und anschließend beide mit dem Einsatzgemisch vereinigt werden. Entsprechende Vorteile wurden bereits unter Bezug auf die Rückspeisung nur des zweiten Retentats erläutert. Zusätzlich stellt dies die einfachste Verschaltung dar, die zusätzlich den geringsten Regelungsaufwand erfordert.

In dem erläuterten Fall, in dem das erste und das zweite kohlenmonoxidreiche Retentat auf das erste Druckniveau druckerhöht und mit dem Einsatzgemisch vereinigt werden, kann mit besonderem Vorteil ein gemeinsamer Verdichtungsprozess verwendet werden, dem das erste und das zweite kohlenmonoxidreiche Retentat auf unterschiedlichen Druckniveaus zugeführt werden. Insbesondere kann hierbei ein mehrstufiger Verdichter zum Einsatz kommen, dem das erste kohlenmonoxidreiche Retentat auf einer Zwischenstufe und das zweite kohlenmonoxidreiche Retentat stromauf der ersten Verdichtungsstufe zugeführt wird.

Die vorliegende Erfindung erstreckt sich auch auf eine Anlage zur trenntechnischen Bearbeitung eines Kohlenmonoxid und Wasserstoff enthaltenden Einsatzgemischs, die Mittel aufweist, die dafür eingerichtet sind, das Einsatzgemisch einem kryogenen Trennprozess zu unterwerfen, in dem eine erste und eine zweite kohlenmonoxidreiche Flüssigkeit sowie ein erstes und ein zweites, jeweils gegenüber dem Einsatzgemisch an Kohlenmonoxid abgereichertes und an Wasserstoff angereichertes Restgasgemisch gebildet werden.

Eine entsprechende Anlage zeichnet sich erfindungsgemäß durch Mittel aus, die dafür eingerichtet sind, die beiden Restgasgemische einem Membrantrennprozess zu unterwerfen, in dem ein erstes und ein zweites wasserstoffreiches Permeat sowie ein erstes und ein zweites kohlenmonoxidreiches Retentat gebildet werden. Dabei sind Mittel vorgesehen, die dafür eingerichtet sind, die beiden kohlenmonoxidreichen Retentate in den kryogenen Trennprozess zurückzuführen.

Vorteilhafterweise umfasst eine entsprechende Anlage sämtliche zur Durchführung eines zuvor erläuterten Verfahrens eingerichteten Mittel und ist zur Durchführung eines entsprechenden Verfahrens ausgebildet. Auf entsprechende Merkmale und Vorteile, die bereits oben erläutert wurden, wird daher ausdrücklich verwiesen.

Die Erfindung wird nachfolgend unter Bezugnahme auf die beigefügte Zeichnung näher erläutert, die bevorzugte Ausführungsformen der Erfindung veranschaulicht.

Kurze Beschreibung der Zeichnungen
Figur 1 veranschaulicht ein Verfahren gemäß einer Ausführungsform der Erfindung in Form eines vereinfachten schematischen Ablaufplans.
Figur 2 veranschaulicht ein Verfahren gemäß einer weiteren Ausführungsform der Erfindung in Form eines vereinfachten, schematischen Ablaufplans.

### Ausführliche Beschreibung der Zeichnungen

In den Figuren sind einander entsprechende Elemente mit vergleichbarer Funktion mit identischen Bezugszeichen angegeben und werden der Übersichtlichkeit halber nicht wiederholt erläutert. In den Figuren sind Schritte bzw. Elemente eines Verfahrens gezeigt. Die Erläuterungen betreffen jedoch eine entsprechende Anlage in gleicher Weise, so dass, wenn nachfolgend von Verfahrensschritten die Rede ist, die entsprechenden Erläuterungen auch für Anlagenkomponenten gelten und umgekehrt.

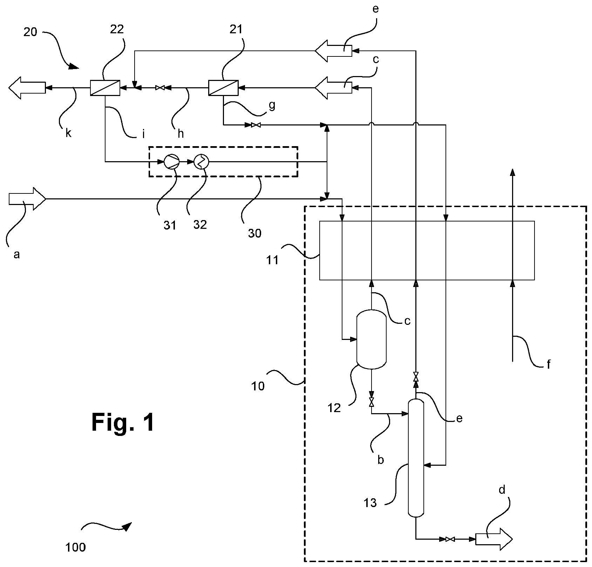

In Figur 1 ist ein Verfahren gemäß einer Ausführungsform der Erfindung in Form eines schematischen Ablaufplans veranschaulicht und insgesamt mit 100 bezeichnet. Das Verfahren 100 umfasst einen kryogenen Trennprozess, der insgesamt mit 10 bezeichnet ist, einen Membrantrennprozess, der insgesamt mit 20 bezeichnet ist, und einen Verdichtungsprozess, der insgesamt mit 30 bezeichnet ist.

Dem kryogenen Trennprozess 10 wird ein Einsatzgemisch in Form eines Stroms a zugeführt und optional mit einem weiteren Strom vereinigt, wie unten erläutert. In dem kryogenen Trennprozess 10 wird der Strom a durch einen oder mehrere Wärmetauscher 11 geführt, hierdurch auf ein Temperaturniveau entsprechend der anderen Prozessparameterabgekühlt und bei einem Druck entsprechend dem Druck des Einsatzgemischs a (hier als erstes Druckniveau" bezeichnet) in einen Abscheidebehälter 12 eingespeist. In dem Abscheidebehälter 12 scheidet sich bei dem verwendeten Druck eine flüssige, an Kohlenmonoxid angereicherte Fraktion ab, die hier als "Zwischenfraktion" bezeichnet wird.

Die Zwischenfraktion kann dem Abscheidebehälter 12 in Form eines Stroms b entnommen, über ein nicht bezeichnetes Ventil entspannt und in eine Stripkolonne 13 eingespeist werden. Ferner wird dem Abscheidebehälter 12 ein Restgas, das hier als "erstes" Restgas und herkömmlicherweise als Rohwasserstoff bezeichnet wird, in Form des Stroms c entnommen.

In der Stripkolonne 13 wird aus der flüssigen Zwischenfraktion, die in Form des Stroms b in die Stripkolonne 13 eingespeist wird, eine kohlenmonoxidreiche Flüssigkeit und eine Restgasfraktion gewonnen. Die Restgasfraktion aus der Stripkolonne 13 wird hier als "zweite" Restgasfraktion und herkömmlicherweise auch als Flashgas bezeichnet. Die kohlenmonoxidreiche Flüssigkeit aus der Stripkolonne kann dieser in Form des Stroms d entnommen und beispielsweise entspannt und weiteren Reinigungsschritten zugeführt werden. Die zweite Restgasfraktion kann in Form des Stroms e aus der Stripkolonne abgezogen und ebenfalls entspannt werden.

Die erste Restgasfraktion in Form des Stroms c und die zweite Restgasfraktion in Form des Stroms e werden in dem oder den Wärmetauschern 11 angewärmt, durch den ferner gegebenenfalls weitere kalte Ströme, wie hier mit dem Strom f veranschaulicht, geführt werden. Die erste Restgasfraktion in Form des Stroms c und die zweite Restgasfraktion in Form des Stroms e werden den Membrantrennprozess 20 bzw. einem ersten Membrantrennschritt 21 und einem zweiten Membrantrennschritt 22 in dem Membrantrennprozess 20 zugeführt. Die erste Restgasfraktion c wird dabei dem ersten Membrantrennschritt 21 und die zweite Restgasfraktion e dem zweiten Membrantrennschritt 22 zugeführt.

In dem ersten Membrantrennschritt 21 wird ein Retentat gebildet, das in Form des Stroms g aus dem ersten Membrantrennschritt 21 ausgeführt werden kann. Ferner wird in dem ersten Membrantrennschritt 21 ein Permeat gebildet, das in Form des Stroms h aus dem ersten Membrantrennschritt 21 ausgeführt, über ein nicht gesondert bezeichnetes Ventil entspannt, und dem zweiten Membrantrennschritt 22, dem auch die zweite Restgasfraktion in Form des Stroms e zugeführt wird, zugeführt wird.

Auch in dem zweiten Membrantrennschritt 22 werden ein Retentat und ein Permeat gebildet, wobei das Retentat in Form des Stroms i und das Permeat in Form des Stroms k aus dem zweiten Membrantrennschritt ausgeführt werden können. Das Permeat des zweiten Membrantrennschritts 2 in Form des Stroms k stellt im Wesentlichen Wasserstoff dar.

In dem in Figur 1 veranschaulichten Verfahren 100 wird das erste Retentat des ersten Membrantrennschritts 21 in Form des Stroms g in dem Wärmetauscher 11 des kryogenen Trennprozesses 10 abgekühlt und in die Stripkolonne 13 eingespeist. Für die weitere Verwendung des zweiten Retentats des zweiten kryogenen Trennschritts 22 in Form des Stroms i bestehen zwei unterschiedliche Möglichkeiten. In beiden Fällen wird der Strom i und damit das zweite Retentat dem Verdichtungsprozess 30 zugeführt und hierin in einem Verdichter 31, der ein- oder mehrstufig ausgeführt sein kann, verdichtet. Verdichtungswärme wird über einen Wärmetauscher 32 abgeführt. Je nach der in dem Verdichtungsprozess 30 erfolgten Verdichtung kann der Strom i anschließend mit dem Strom a, oder mit dem Strom g und damit dem ersten Retentat, vereinigt werden.

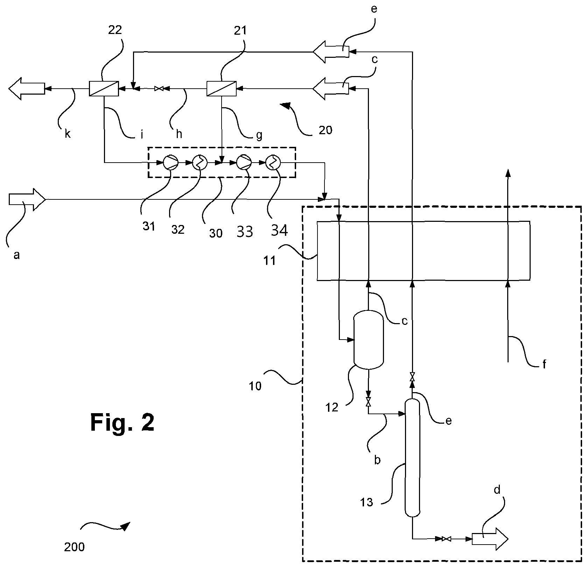

In dem in Figur 1 erläuterten Verfahren 100, jedoch auch in dem in Figur 2 erläuterten Verfahren 200 wird der Abscheidebehälter 12 auf einem hier als "erstes" Druckniveau bezeichneten Druckniveau, die Stripkolonne 13 auf einem hier als "Zwischendruckniveau" bezeichneten Druckniveau, der erste Membrantrennschritt 21 auf dem ersten Druckniveau und der zweite Membrantrennschritt 22 auf einem hier als "zweites" Druckniveau bezeichneten Druckniveau betrieben. Das erste Druckniveau liegt dabei oberhalb des zweiten Druckniveaus und das Zwischendruckniveau zwischen dem ersten und dem zweiten Druckniveau. Alternativ kann das Zwischendruckniveau auch dem zweiten Druckniveau entsprechen, eine Entspannung des zweiten Restgasgemischs entfällt in diesem Fall.

In Figur 2 ist ein Verfahren gemäß einer weiteren Ausführungsform der Erfindung veranschaulicht und insgesamt mit 200 bezeichnet. Das in Figur 2 veranschaulichte Verfahren 200 unterscheidet sich von dem in Figur 1 veranschaulichten Verfahren 100 im Wesentlichen durch die abweichende Behandlung der Ströme g bzw. i und damit des ersten und zweiten Retentats. In dem in Figur 2 veranschaulichten Verfahren 200 werden das erste Retentat in Form des Stroms g und das zweite Retentat in Form des Stroms i vereinigt. Die Vereinigung erfolgt dabei innerhalb des Verdichtungsprozesses 30, in dem hier zwei Verdichtungsstufen 31 und 33 mit jeweils nachgeordneten Nachkühlern 32 und 34 vorgesehen sind. Der Strom g wird einer Zwischenstufe in dem Verdichtungsprozess 30 zugeführt. Insgesamt werden die Ströme i und g auf das erste Druckniveau, also das Druckniveau, auf dem der Abscheidebehälter 12 betrieben wird, verdichtet und auf diesem Druckniveau mit dem Einsatzstrom a vereinigt.

War zuvor davon die Rede, dass der erste Membrantrennschritt 21 auf dem ersten Druckniveau betrieben wird, versteht der Fachmann, dass in einem entsprechenden Membrantrennschritt ein unvermeidlicher Druckverlust auftritt und damit der Strom g nicht mehr auf dem ersten Druckniveau vorliegt und damit rückverdichtet werden muss.

## Patentansprüche

1. Verfahren (100, 200) zur trenntechnischen Bearbeitung eines überwiegend oder ausschließlich Kohlenmonoxid und Wasserstoff enthaltenden, auf einem ersten Druckniveau vorliegenden Einsatzgemischs (a), aus dem hierbei in einem kryogenen Trennprozess (10) zunächst durch teilweise Kondensation auf dem ersten Druckniveau in einem Abscheidebehälter (12) unter Verbleib eines ersten Restgasgemischs (c) eine flüssige Zwischenfraktion (b) gebildet wird, die nachfolgend auf ein Zwischendruckniveau entspannt und in eine Stripkolonne (13) eingespeist wird, der ein zweites Restgasgemisch (e) und eine kohlenmonoxidreiche Flüssigkeit (d) entnommen werden, wobei aus dem ersten Restgasgemisch (c) in einem auf dem ersten Druckniveau durchgeführten ersten Membrantrennschritt (21) ein erstes kohlenmonoxidreiches Retentat (g) und ein erstes wasserstoffreiches Permeat (h) gebildet werden, von denen das erste kohlenmonoxidreiche Retentat (g) in den kryogenen Trennprozess (10) zurückgeführt wird,
**dadurch gekennzeichnet, dass**
das erste wasserstoffreiche Permeat (h) zusammen mit dem zweiten Restgasgemisch (e) in einem zweiten Membrantrennschritt (22) in ein zweites wasserstoffreiches Permeat (k) und ein zweites kohlenmonoxidreiches Retentat (i) getrennt wird, und dass neben dem ersten (g) auch das zweite kohlenmonoxidreiche Retentat (i) in den kryogenen Trennprozess (10) zurückgeführt wird.

2. Verfahren nach Anspruch 1, bei dem das erste (g) und das zweite kohlenmonoxidreiche Retentat (i) auf das Zwischendruckniveau gebracht, vereinigt und in die Stripkolonne (13) eingespeist werden.

3. Verfahren nach Anspruch 1, bei dem das erste kohlenmonoxidreiche Retentat (g) auf das Zwischendruckniveau entspannt und in die Stripkolonne (13) eingespeist und das zweite kohlenmonoxidreiche Retentat (i) auf das erste Druckniveau druckerhöht und mit dem Einsatzgemisch (a) vereinigt wird.

4. Verfahren nach Anspruch 1, bei dem das erste (g) und das zweite kohlenmonoxidreiche Retentat (i) auf das erste Druckniveau druckerhöht und mit dem Einsatzgemisch (a) vereinigt werden.

5. Verfahren nach einem der Ansprüche 1 bis 4, bei dem der erste Membrantrennschritt (21) auf einem Druckniveau in Höhe des ersten Druckniveaus des Einsatzgemischs (a) und der zweite Membrantrennschritt (22) auf einem zweiten Druckniveau durchgeführt wird, das auf dem Druckniveau der Stripkolonne (13) oder tiefer liegt.

6. Verfahren nach einem der Ansprüche 1 bis 5, bei dem das erste Restgasgemisch (c) und das zweite Restgasgemisch (e) im Gegenstrom zu dem Einsatzgemisch (a) erwärmt werden.

7. Anlage (100, 200) zur trenntechnischen Bearbeitung eines überwiegend oder ausschließlich Kohlenmonoxid und Wasserstoff enthaltenden Einsatzgemischs (a), mit einer, zwei Membraneinheiten (21, 22) aufweisenden Membrantrenneinrichtung (20) sowie einer mit dieser strömungstechnisch verbundenen, einen Abscheidebehälter (12) und eine Strippkolonne (13) umfassenden kryogenen Trenneinrichtung (10), wobei die Anlage dazu eingerichtet ist, aus
dem auf einem ersten Druckniveau vorliegenden Einsatzgasgemisch (a) durch teilweise Kondensation auf dem ersten Druckniveau in dem Abscheidebehälter (12) unter Verbleib eines ersten Restgasgemischs (c) eine flüssige Zwischenfraktion (d) zu bilden, die nach Entspannung auf ein Zwischendruckniveau in die Stripkolonne (13) einspeisbar ist, um ein zweites Restgasgemisch (e) und eine kohlenmonoxidreiche Flüssigkeit (d) zu erhalten, wobei aus dem ersten Restgasgemisch (c) in der auf dem ersten Druckniveau betreibbaren ersten Membraneinheit (21) ein erstes kohlenmonoxidreiches Retentat (g) und ein erstes wasserstoffreiches Permeat (h) erhältlich sind, und die Anlage dazu eingerichtet ist, das erste kohlenmonoxidreiche Retentat (g) in den kryogenen Trennprozess (10) zurückzuführen **dadurch gekennzeichnet, dass** die Anlage dazu eingerichtet ist, das erste wasserstoffreiche Permeat (h) zusammen mit dem zweiten Restgasgemisch (e) in der zweiten Membraneinheit (22) in ein zweites wasserstoffreiches Permeat (k) und ein zweites kohlenmonoxidreiches Retentat (i) zu trennen, und dass die strömungstechnische Verbindung zwischen der Membrantrenneinrichtung (20) und der kryogenen Trenneinrichtung (10) so ausgeführt ist, dass neben dem ersten (g) auch das zweite kohlenmonoxidreiche Retentat (i) in den kryogenen Trennprozess (10) zurückgeführt werden kann.

8. Anlage nach Anspruch 7, mit einer Entspannungseinrichtung und einem Verdichter (30), wobei die Membrantrenneinrichtung (20) über die Entspannungseinrichtung und den Verdichter (30) mit der kryogenen Trenneinrichtung (10) verbunden ist, wobei das erste kohlenmonoxidreiche Retentat (g) über die Entspannungseinrichtung und das zweite kohlenmonoxidreiche Retentat (i) über den Verdichter (30) auf das Zwischendruckniveau gebracht und vereinigt in die Stripkolonne (13) eingespeist werden können.

9. Anlage nach Anspruch 7, mit einer Entspannungseinrichtung und einem Verdichter (30), wobei die Membrantrenneinrichtung (20) über die Entspannungseinrichtung und den Verdichter (30) mit der kryogenen Trenneinrichtung (10) verbunden ist, wobei das erste kohlenmonoxidreiche Retentat (g) über die Entspannungseinrichtung auf das Zwischendruckniveau entspannt und in die Stripkolonne (13) eingespeist und das zweite kohlenmonoxidreiche Retentat (i) über den Verdichter (30) auf das erste Druckniveau druckerhöht und mit dem Einsatzgemisch (a) vereinigt werden kann.

10. Anlage nach Anspruch 7, mit einem Verdichter (30), wobei die Membrantrenneinrichtung (20) über den Verdichter (30) mit der kryogenen Trenneinrichtung (10) verbunden ist, über den das erste (g) und das zweite kohlenmonoxidreiche Retentat (i) auf das erste Druckniveau druckerhöht und mit dem Einsatzgemisch (a) vereinigt werden können.

## Claims

1. A method (100, 200) for separating a feed mixture (a) which predominantly or exclusively contains carbon monoxide and hydrogen and is present at a first pressure level, and from which, in a cryogenic separation process (10), a liquid intermediate fraction (b) is initially formed by partial condensation at the first pressure level in a separation vessel (12), leaving a first residual gas mixture (c), which liquid intermediate fraction is subsequently expanded to an intermediate pressure level and fed into a stripping column (13), from which a second residual gas mixture (e) and a carbon monoxide-rich liquid (d) are removed, a first carbon monoxide-rich retentate (g) and a first hydrogen-rich permeate (h) being formed from the first residual gas mixture (c) in a first membrane separation step (21) carried out at the first pressure level, the first carbon monoxide-rich retentate (g) being returned to the cryogenic separation process (10),
**characterized in that** the first hydrogen-rich permeate (h), together with the second residual gas mixture (e), is separated in a second membrane separation step (22) into a second hydrogen-rich permeate (k) and a second carbon monoxide-rich retentate (i), and **in that,** in addition to the first carbon monoxide-rich retentate (g), the second carbon monoxide-rich retentate (i) is also returned to the cryogenic separation process (10).

2. The method according to claim 1, wherein the first carbon monoxide-rich retentate (g) and the second carbon monoxide-rich retentate (i) are brought to the intermediate pressure level, combined and fed into the stripping column (13).

3. The method according to claim 1, wherein the first carbon monoxide-rich retentate (g) is expanded to the intermediate pressure level and fed into the stripping column (13) and the second carbon monoxide-rich retentate (i) is increased in pressure to the first pressure level and combined with the feed mixture (a).

4. The method according to claim 1, wherein the first carbon monoxide-rich retentate (g) and the second carbon monoxide-rich retentate (i) are increased in pressure to the first pressure level and are combined with the feed mixture (a).

5. The method according to any of claims 1 to 4, wherein the first membrane separation step (21) is carried out at a pressure level at the level of the first pressure level of the feed mixture (a) and the second membrane separation step (22) is carried out at a second pressure level which is at the pressure level of the stripping column (13) or lower.

6. The method according to any of claims 1 to 5, wherein the first residual gas mixture (c) and the second residual gas mixture (e) are heated in countercurrent to the feed mixture (a).

7. A plant (100, 200) for separating a feed mixture (a) which predominantly or exclusively contains carbon monoxide and hydrogen, comprising a membrane separation device (20) having two membrane units (21, 22), and a cryogenic separation device (10) which is fluidically connected to said membrane separation device and comprises a separation vessel (12) and a stripping column (13), the plant being designed to form a liquid intermediate fraction (d) from the feed gas mixture (a) present at a first pressure level by partial condensation at the first pressure level in the separation vessel (12), leaving a first residual gas mixture (c), which liquid intermediate fraction, after expansion to an intermediate pressure level, is fed into the stripping column (13) in order to obtain a second residual gas mixture (e) and a carbon monoxide-rich liquid (d), a first carbon monoxide-rich retentate (g) and a first hydrogen-rich permeate (h) being obtainable from the first residual gas mixture (c) in the first membrane unit (21) operable at the first pressure level, and the plant being designed to return the first carbon monoxide-rich retentate (g) to the cryogenic separation process (10), **characterized in that** the plant is designed to separate the first hydrogen-rich permeate (h) together with the second residual gas mixture (e) in the second membrane unit (22) into a second hydrogen-rich permeate (k) and a second carbon monoxide-rich retentate (i), and **in that** the fluidic connection between the membrane separation device (20) and the cryogenic separation device (10) is designed such that, in addition to the first carbon monoxide-rich retentate (g), the second carbon monoxide-rich retentate (i) can also be returned to the cryogenic separation process (10).

8. The plant according to claim 7, comprising an expansion device and a compressor (30), wherein the membrane separation device (20) is connected to the cryogenic separation device (10) via the expansion device and the compressor (30), wherein the first carbon monoxide-rich retentate (g) can brought to the intermediate pressure level via the expansion device and the second carbon monoxide-rich retentate (i) can brought to the intermediate pressure level via the compressor (30) and said retentates can be fed into the stripping column (13) in a combined manner.

9. The plant according to claim 7, comprising an expansion device and a compressor (30), wherein the membrane separation device (20) is connected to the cryogenic separation device (10) via the expansion device and the compressor (30), wherein the first carbon monoxide-rich retentate (g) can be expanded to the intermediate pressure level via the expansion device and fed into the stripping column (13), and the second carbon monoxide-rich retentate (i) can be increased in pressure to the first pressure level via the compressor (30) and combined with the feed mixture (a).

10. The plant according to claim 7, comprising a compressor (30), wherein the membrane separation device (20) is connected via the compressor (30) to the cryogenic separation device (10), via which the first carbon monoxide-rich retentate (g) and the second carbon monoxide-rich retentate (i) can be increased in pressure to the first pressure level and combined with the feed mixture (a).

## Revendications

1. Procédé (100, 200) permettant le traitement suivant la technique de séparation d'un mélange de charge (a) contenant principalement ou exclusivement du monoxyde de carbone et de l'hydrogène et présent à un premier niveau de pression, à partir duquel mélange une fraction intermédiaire liquide (b) est ainsi formée dans un processus de séparation cryogénique (10), d'abord par condensation partielle au premier niveau de pression dans un récipient séparateur (12) avec maintien d'un premier mélange gazeux résiduel (c), laquelle fraction se détend ensuite à un niveau de pression intermédiaire et est introduite dans une colonne de stripage (13) depuis laquelle un second mélange gazeux résiduel (e) et un liquide riche en monoxyde de carbone (d) sont prélevés, un premier rétentat riche en monoxyde de carbone (g) et un premier perméat riche en hydrogène (h), parmi lesquels le premier rétentat riche en monoxyde de carbone (g) est recyclé dans le processus de séparation cryogénique (10), étant formés à partir du premier mélange gazeux résiduel (c) dans une première étape de séparation par membrane (21) réalisée au premier niveau de pression,
**caractérisé en ce que** le premier perméat riche en hydrogène (h), conjointement avec le second mélange gazeux résiduel (e), est séparé dans une seconde étape de séparation par membrane (22) en un second perméat riche en hydrogène (k) et un second rétentat riche en monoxyde de carbone (i),
et **en ce que**, outre le premier rétentat (g), le second rétentat riche en monoxyde de carbone (i) est également recyclé dans le processus de séparation cryogénique (10).

2. Procédé selon la revendication 1, dans lequel le premier (g) et le second rétentat riche en monoxyde de carbone (i) sont amenés au niveau de pression intermédiaire, combinés et introduits dans la colonne de stripage (13).

3. Procédé selon la revendication 1, dans lequel le premier rétentat riche en monoxyde de carbone (g) est détendu au niveau de pression intermédiaire et introduit dans la colonne de stripage (13) et le second rétentat riche en monoxyde de carbone (i) est soumis à une augmentation de pression au premier niveau de pression et est combiné au mélange de charge (a).

4. Procédé selon la revendication 1, dans lequel le premier (g) et le second rétentat riche en monoxyde de carbone (i) sont soumis à une augmentation de pression au premier niveau de pression et combinés au mélange de charge (a).

5. Procédé selon l'une des revendications 1 à 4, dans lequel la première étape de séparation par membrane (21) est réalisée à un niveau de pression à hauteur du premier niveau de pression du mélange de charge (a) et la seconde étape de séparation par membrane (22) est réalisée à un second niveau de pression situé au niveau de pression de la colonne de stripage (13) ou inférieur à celui-ci.

6. Procédé selon l'une des revendications 1 à 5, dans lequel le premier mélange gazeux résiduel (c) et le second mélange gazeux résiduel (e) sont chauffés à contre-courant du mélange de charge (a).

7. Installation (100, 200) permettant le traitement suivant la technique de séparation d'un mélange de charge (a) contenant principalement ou exclusivement du monoxyde de carbone et de l'hydrogène, comportant un dispositif de séparation par membrane (20) présentant deux unités à membrane (21, 22) ainsi qu'un dispositif de séparation cryogénique (10) relié par communication fluidique à celui-ci et comprenant un réservoir séparateur (12) et une colonne de stripage (13), l'installation étant conçue pour former une fraction intermédiaire liquide (d) à partir du mélange gazeux de charge (a) présent à un premier niveau de pression par condensation partielle au premier niveau de pression dans le réservoir séparateur (12) avec maintien d'un premier mélange gazeux résiduel (c), laquelle fraction, après une détente à un niveau de pression intermédiaire, peut être introduite dans la colonne de stripage (13) pour obtenir un second mélange gazeux résiduel (e) et un liquide riche en monoxyde de carbone (d), un premier rétentat riche en monoxyde de carbone (g) et un premier perméat riche en hydrogène (h) pouvant être obtenus à partir du premier mélange gazeux résiduel (c) dans la première unité à membrane (21) pouvant fonctionner au premier niveau de pression, et l'installation étant conçue pour recycler le premier rétentat riche en monoxyde de carbone (g) dans le processus de séparation cryogénique (10), **caractérisé en ce que** l'installation est conçue pour séparer le premier perméat riche en hydrogène (h), conjointement avec le second mélange gazeux résiduel (e), dans la seconde unité à membrane (22) en un second perméat riche en hydrogène (k) et un second rétentat riche en monoxyde de carbone (i), et **en ce que** la liaison par communication fluidique entre le dispositif de séparation à membrane (20) et le dispositif de séparation cryogénique (10) est effectuée de telle sorte que, outre le premier rétentat (g), le second rétentat riche en monoxyde de carbone (i) peut également être recyclé dans le processus de séparation cryogénique (10).

8. Installation selon la revendication 7, comportant un dispositif de détente et un compresseur (30), le dispositif de séparation à membrane (20) étant relié au dispositif de séparation cryogénique (10) par l'intermédiaire du dispositif de détente et du compresseur (30), le premier rétentat riche en monoxyde de carbone (g) pouvant être amené au niveau de pression intermédiaire par l'intermédiaire du dispositif de détente et le second rétentat riche en monoxyde de carbone (i) pouvant être amené au niveau de pression intermédiaire par l'intermédiaire du compresseur (30) et ceux-ci pouvant être combinés et introduits dans la colonne de stripage (13).

9. Installation selon la revendication 7, comportant un dispositif de détente et un compresseur (30), le dispositif de séparation à membrane (20) étant relié au dispositif de séparation cryogénique (10) par l'intermédiaire du dispositif de détente et du compresseur (30), le premier rétentat riche en monoxyde de carbone (g) pouvant être détendu au niveau de pression intermédiaire par l'intermédiaire du dispositif de détente et introduit dans la colonne de stripage (13) et le second rétentat riche en monoxyde de carbone (i) pouvant être soumis à une augmentation de pression au premier niveau de pression par l'intermédiaire du compresseur (30) et combiné au mélange de charge (a).

10. Installation selon la revendication 7, comportant un compresseur (30), le dispositif de séparation à membrane (20) étant relié au dispositif de séparation cryogénique (10) par l'intermédiaire du compresseur (30), par l'intermédiaire duquel compresseur le premier (g) et le second rétentat riche en monoxyde de carbone (i) peuvent être soumis à une augmentation de pression au premier niveau de pression et combinés au mélange de charge (a).
